# EUROPEAN PATENT SPECIFICATION

(11) **EP 1 875 355 B1**
(45) Date of publication and mention of the grant of the patent: **13.09.2017**
(21) Application number: 06749704.0
(22) Date of filing: 11.04.2006
(51) Int. Cl.: G06F 12/14, H04L 29/06, H04M 3/22

(54) **METHODS, SYSTEMS, AND COMPUTER PROGRAM PRODUCTS FOR SURVEILLANCE MONITORING IN A COMMUNICATION NETWORK BASED ON A NATIONAL SURVEILLANCE DATABASE**
VERFAHREN, SYSTEME UND COMPUTERPROGRAMMPRODUKTE ZUR BEOBACHTUNGSÜBERWACHUNG IN EINEM KOMMUNIKATIONSNETZ AUF DER BASIS EINER NATIONALEN BEOBACHTUNGSDATENBANK
PROCÉDÉS, SYSTÈMES ET PRODUITS PROGRAMMES INFORMATIQUES DE CONTRÔLE DE SURVEILLANCE DANS UN RÉSEAU DE COMMUNICATION REPOSANT SUR UNE BASE DE DONNÉES DE SURVEILLANCE NATIONALE

(30) Priority: 27.04.2005 US 116089
(43) Date of publication of application: 09.01.2008
(73) Proprietor: Tekelec Global, Inc., Morrisville, NC 27560 (US)
(72) Inventor: DELANEY, Robert, J., Raleigh, North Carolina 27613 (US); EICHLER, Todd, Wake Forest, North Carolina 27587 (US); MARSICO, Peter, Chapel Hill, North Carolina 27516 (US)
(74) Representative: Gill Jennings & Every LLP
(86) International application number: PCT/US2006/013401
(87) International publication number: WO 2006/115762

(56) References cited:
- WO-A1-99/29089
- WO-A2-00/28773
- US-A1- 2003 190 032
- US-A1- 2003 215 069
- US-A1- 2005 055 330
- CAMTEPE A. ET AL.: 'A tool for internet chatroom surveillance' ISI 2004: INTELLIGENCE AND SECURITY INFORMATICS: TUCSON, AZ, [Online] vol. 3073, 10 June 2004 - 11 June 2004, pages 252 - 265, XP008092588 Retrieved from the Internet: <URL:http://www.cs.rpi.edu/~camtes/papers/C amtepe_ISI_2004.pdf>
- SYMONENKO S. ET AL.: 'Semantic analysis for monitoring insider threats' ISI 2004: INTELLIGENCE AND SECURITY INFORMATICS: TUCZON AZ, [Online] vol. 3073, 10 June 2004 - 11 June 2004, pages 492 - 500, XP008092587 Retrieved from the Internet: <URL:http://www.cnlp.org/publications/04/Ar izona.Conf.SemAn_020904.pdf>

## Description

### RELATED APPLICATIONS

This application claims the benefit of U.S. Patent Application Serial No. 11/116,089, filed April 27, 2005, the disclosure of which is incorporated herein by reference in its entirety.

### TECHNICAL FIELD

The subject matter described herein relates to communication monitoring. More particularly, the subject matter described herein relates to providing surveillance monitoring in a communication network based on a national surveillance database.

### BACKGROUND

Security has become an ever-growing concern in today's society. As security threats continue to increase, the perpetrators of crimes are enjoying the benefit of increased mobility and the ability to communicate anonymously using modern communication technologies. In order to better combat such security threats, it would be helpful to have the infrastructure and functionality in place to monitor the use of communication resources, such as the public switched telephone network (PSTN), by target individuals based on information collected and stored on a national level. That is, it would be helpful to law enforcement if a national master list of individuals under surveillance that may be administered, for example, by law enforcement was available to be used to monitor subscriber communication attempts / communications in a communication network.

For example, call patterns and call-associated information, such as called party identification information and calling party identification information, for target individuals under surveillance may be monitored. Such information would prove helpful to law enforcement while limiting the exposure of law enforcement personnel to dangerous situations. In addition, it would be desirable that such information be provided to communication service providers real time or near real time, so that law enforcement can respond swiftly to developing events.

Currently, such a national surveillance database does not exist. Another problem with surveillance in modern communication networks is that subscribers have multiple communication identities. For example, a single subscriber may have several directory numbers, correspond to home, work, and mobile phones. In addition, with the advent of IP telephony, subscribers may also have a IP telephony identities, such as session initiation protocol (SIP) uniform resource indicators (URls). Even if a national surveillance database existed there would still be a need to correlate the identities of a subscriber for surveillance purposes.

Accordingly, there exists a need for methods, systems, and computer program products for providing surveillance monitoring in a communication network based on a national surveillance database and for correlating identities of a subscriber under surveillance.

WO 99/29089 A1 discloses a method and apparatus for centralizing the administration of intercept lists include a master intercept list and an interface which communicates with switches. Switches may or may not include local intercept lists. When a user makes a call, a switch queries the local intercept list or the master intercept list. Information from the query is used to determine whether to intercept the call.

WO 00/28773 A2 discloses a system for the intercept of wireless communications provides that a HLR of a wireless communications system includes one or more flags associated with each subscriber, and the HLR notifies an intercept server each time a call event is detected in the HLR for a subscriber under surveillance as indicated by the flags. The intercept server includes a Gateway Delivery Function module and one or more Delivery Function modules, wherein the Gateway Delivery Function module provisions the Delivery Functions modules depending on the location of the subscriber, to deliver call content or data from an MSC to a collection function operated by a law enforcement agency. Non-call associated data is also provided to a Delivery Function module for delivery to a Collection Function.

US 2003/0215069 A1 discloses a method and apparatus for selectively controlling the connection of a call to a monitoring station, as well as to a called party. Callers and called parties are required to identify themselves through the use of a Personal Identification Number (PIN), or some device such as a thumb reader. A database maintains a list of legitimate personal identification numbers, and of those personal identification numbers or thumb prints which require that a call be monitored. Advantageously, law enforcement agencies can control the monitoring of a call from or to a particular party as identified by a personal identification number or a thumb print, no matter where the call originates or terminates.

US 2003/0190032 A1 discloses methods and systems for intelligent signaling-router-based surveillance are disclosed. A surveillance and signaling router receives call signaling messages, identifies call signaling messages associated with users under surveillance and determines a surveillance type for the call signaling messages. If the surveillance type is content-related, the surveillance and signaling router forwards the message to a call server. The call server replaces parameters in the message and in subsequent messages so that the call is transparently set up through a media proxy server. The media proxy server copies the media stream to a delivery function. If the surveillance type is non-content-related, the surveillance and signaling router sends a copy of the message or information extracted from the message to an external device.

### SUMMARY

According to a first aspect of the invention, there is provided a method as set out in claim 1.

According to a second aspect of the invention, there is provided a computer program product as set out in claim 4.

According to a third aspect of the invention, there is provided a system as set out in claim 5.

### BRIEF DESCRIPTION OF THE DRAWINGS

Objects and advantages of the present invention will become apparent to those skilled in the art upon reading this description in conjunction with the accompanying drawings, in which like reference numerals have been used to designate like elements, and in which:
Figure 1 is a block diagram illustrating a system for providing surveillance monitoring in a communication network based on a national surveillance database according to an aspect of the subject matter disclosed herein;
Figure 2 is a block diagram illustrating a system for providing surveillance monitoring in a communication network based on a national surveillance database according to another aspect of the subject matter disclosed herein;
Figure 3 is a block diagram illustrating a system for providing surveillance monitoring in a communication network based on a national surveillance database according to an aspect of the subject matter disclosed herein;
Figure 4 is a flow diagram illustrating a method for providing surveillance monitoring in a communication network based on a national surveillance database according to an aspect of the subject matter described herein; and
Figure 5 is a flow diagram illustrating a method for providing surveillance monitoring in a communication network based on a national surveillance database according to another aspect of the subject matter described herein.

### DETAILED DESCRIPTION

To facilitate an understanding of exemplary embodiments, many aspects are described in terms of sequences of actions that can be performed by elements of a computer system. For example, it will be recognized that in each of the embodiments, the various actions can be performed by specialized circuits or circuitry (e.g., discrete logic gates interconnected to perform a specialized function), by program instructions being executed by one or more processors, or by a combination of both.

Moreover, the sequences of actions can be embodied in any computer-readable medium for use by or in connection with an instruction execution system, apparatus, or device, such as a computer-based system, processor containing system, or other system that can fetch the instructions from a computer-readable medium and execute the instructions.

As used herein, a "computer-readable medium" can be any means that can contain, store, communicate, propagate, or transport the program for use by or in connection with the instruction execution system, apparatus, or device. The computer-readable medium can be, for example but not limited to, an electronic, magnetic, optical, electromagnetic, infrared, or semiconductor system, apparatus, device, or propagation medium. More specific examples (a non-exhaustive list) of the computer-readable medium can include the following: an electrical connection having one or more wires, a portable computer diskette, a random access memory (RAM), a read-only memory (ROM), an erasable programmable read-only memory (EPROM or Flash memory), an optical fiber, and a portable compact disc read-only memory (CDROM).

Thus, the subject matter described herein can be embodied in many different forms, and all such forms are contemplated to be within the scope of what is claimed.

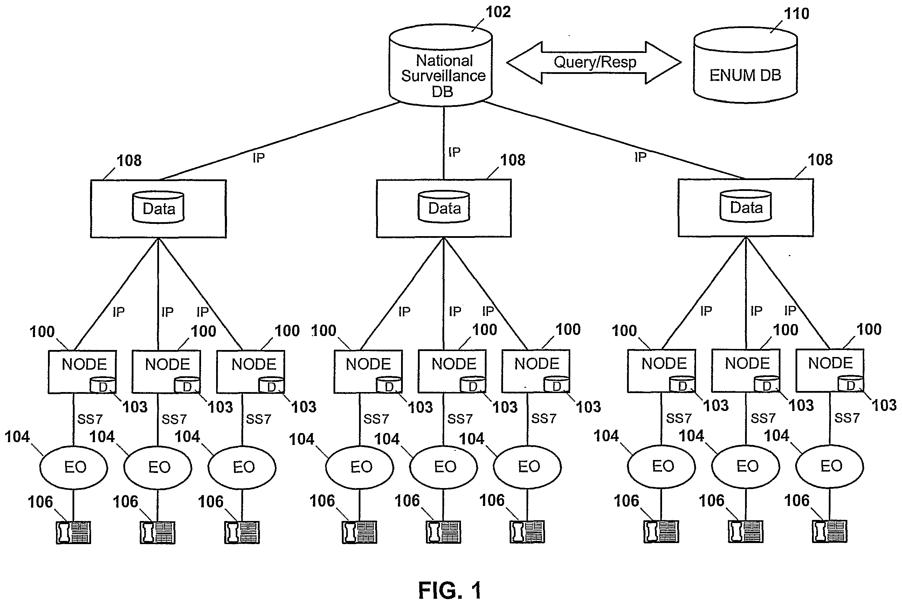

Figure 1 is a block diagram illustrating a system for providing surveillance monitoring in a communication network based on a national surveillance database according to an aspect of the subject matter disclosed herein. In Figure 1, the system includes one or more communications nodes **100** that receive communication-related information relating to individuals under surveillance from a national surveillance database **102.** Communication nodes **100** use the received communication-related information to screen signaling messages relating to communications associated with the individuals, as discussed further below. Some or all of the received communication-related information may be stored locally on communication node **100** in a local database **103.** The signaling messages may be received, for example, from an end office **104** in a public switched telephone network (PSTN) according to signaling system 7 (SS7) protocol. End office **104** is connected to one or more telephones **106** and facilitates calls over the PSTN.

Each communication node **100** can be an SS7 signal transfer point (STP), an SS7-lnternet protocol (IP) signaling gateway, SS7 service control point, a router, a session initiation protocol (SIP) proxy node, an IP multimedia subsystem (IMS) node, a media gateway controller (MGC), a softswitch, a media gateway (MG), a mobile switching center (MSC), a home location register (HLR), an equipment identity register (EIR) node, an authentication center (AuC), a radio access network (RAN) node, or any other communication node.

According to one aspect, national surveillance database **102** includes communication-related information for individuals under surveillance. The communication-related information is downloaded to each communication node **100** using any known communication method. For example, the communication- related information may be provided to each communication node **100** over an IP network via an IP link, either directly or indirectly. For example, according to one implementation, the national surveillance database distributes the communication-related information to one or more regional databases **108,** which provide the communication-related information to communication nodes **100.** The communication-related information in regional databases **108** may be a copy of the information contained in a national surveillance database **102** or may be a subset of the information that corresponds to a specific region. For example, a regional database may include communication-related information that corresponds to a specific service provider or to a specific region.

According to another aspect, an electronic numbering (ENUM) database **110** provides additional subscriber identities that correspond to a subscriber once one subscriber ID is provided. ENUM database **110** may access a domain name system (DNS) server that includes one or more additional subscriber identifiers that correspond to a subscriber ID. For example, the subscriber ID may be a subscriber's telephone number and the corresponding subscriber identifiers may be one or more SIP URIs. ENUM database generally correlates an E.164 formatted telephone number such as a home number, pager number, mobile number, or fax number, or dialable short code identifier to one or more SIP URIs that can identify an IP address, an e-mail address, a network alias identifier (e.g., a screen name), and other like information associated with the subscriber. Other information may be contained in ENUM database **110** as well, such as phone numbers.

National surveillance database **102** may query ENUM database **110** to obtain the corresponding subscriber identifiers associated with a subscriber identifier in a national surveillance database **102.** For example, when a surveillance authority places a subscriber ID, such as phone number "9193803814", under surveillance, a surveillance application in national surveillance database **102** can query ENUM database **110** using the "9193803814" identifier to obtain all other identifiers to which the number has been associated.

National surveillance database **102** may query ENUM database **110** periodically for updates or as information is needed. In one aspect, ENUM database **110** is adapted to receive a subscription request that is associated with a "watched" subscriber ID and to report to the national surveillance database all ENUM information corresponding to the watched subscriber ID. ENUM database **110** may also be adapted to report all changes to ENUM information.

In one implementation, ENUM database **110** is adapted to respond to queries by national surveillance database **102** with a set of one or more naming authority pointer (NAPTR) records, which contain one or more uniform resource identifier (URI) values associated with the subscriber identifier. The phone number "9193803814" may be transformed into a hostname by reversing the numbers, separating them with dots, and adding an e164.arpa suffix, to yield 4.1.8.3.0.8.3.9.1.9.e164.arpa. A DNS server can then be used to look up Internet addresses for services such as SIP telephony. NAPTR records may be used to translate E.164 addresses to SIP addresses. An exemplary NAPTR record is shown below:
$ORIGIN 2.4.2.4.5.5.5.1.e164.arpa.
IN NAPTR 100 10 "u" "sip+E2U" "!^.*$!sip:phoneme@example.net!".

The above example specifies that sip:phoneme@example.net is the address for the "sip+E2U" service. The expression provides the ability to map corresponding SIP addresses to subscribers.

The surveillance application receives the NAPTR records and incorporates the URI values into the surveillance database. Alternatively, or in addition, ENUM database **110** may respond to queries by regional databases 108.

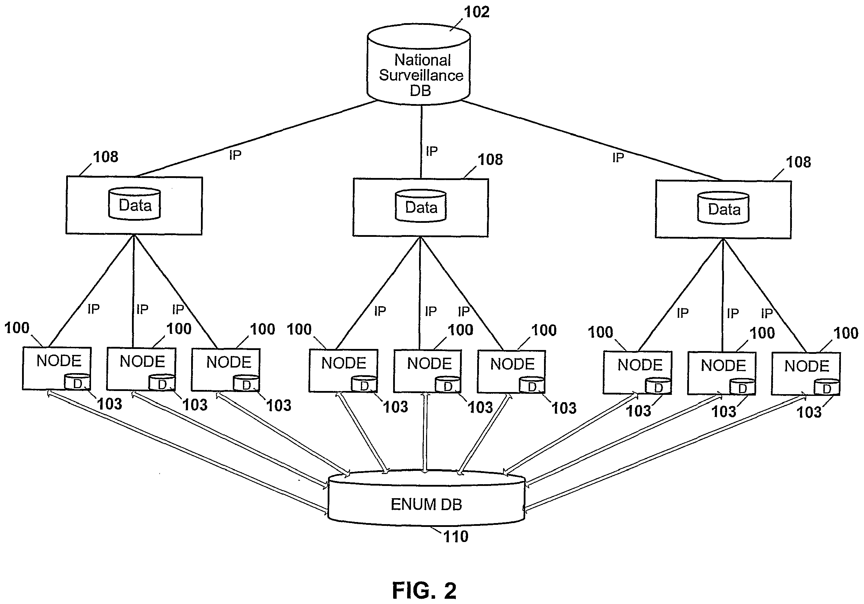

According to another aspect of the subject matter disclosed herein, communication nodes **100** are adapted to query ENUM database **110** for ENUM information. Figure 2 is a block diagram illustrating a system for providing surveillance monitoring in a communication network based on a national surveillance database according to another aspect of the subject matter disclosed herein. In Figure 2, communication nodes **100** are adapted to query ENUM database **110** to receive ENUM information corresponding to the communication-related information received from national surveillance database **102.** For example, communication node **100** may send a request message to ENUM database **110** that includes a subscriber ID, such as a phone number. ENUM database **110** may send a response message that includes corresponding subscriber identifiers, such as a SIP URI.

Whether the information is provided directly to communication node **100** by ENUM database **110** or via national surveillance database **102,** communication node **100** may use the received ENUM information to screen signaling messages relating to communications associated with the individuals.

National surveillance database **102** preferably includes a master list of individuals under surveillance, with regional databases **108** and/or communication nodes **100** being updated to match corresponding information in national surveillance database **102.** For example, updated communication-related information may be provided to the regional databases and/or communication nodes as a periodic update. Communication node **100** may include a data audit function to confirm that the communication-related information in communication node **100** is current and matches the corresponding communication-related permission in the national surveillance database **102** and/or regional databases **108.**

The communication-related information may also be encrypted and/or transferred to communication node **100** using a secure connection. For example, a secure connection may be established by using one or more security protocols for transferring the communication-related information over an IP network. Examples of security protocols include Internet protocol security protocol (IPSec), secure sockets layer (SSL), private communications technology (PCT), hypertext transport protocol secure (HTTPS), and secure hypertext transport protocol (SHTTP).

National surveillance database **102** is preferably administered by a law enforcement agency or other authority to provide secure centralized control of the communication-related information. According to one implementation, the communication-related information is not directly accessible or otherwise viewable at communication node **100** for added security.

Exemplary communication-related information that may be received by communication node **100** from national surveillance database **108** is illustrated in Table 1. Table 1 includes a subscriber identifier, corresponding ENUM information, a communication mode identifier, a surveillance action instruction, a surveillance authority contact identifier, a surveillance authority contact mode identifier, a surveillance tap identifier, a surveillance start time indicator, and a surveillance end time indicator. Table 1 may also include other information not shown, such as a text-to-voice conversion preference and a language translation preference.

**Table 1: Exemplary Communication-Related Information**

| Subscriber ID | Associated ENUM Information | Communication Mode | Surveillance Action | Surveillance Authority Contact ID | Surveillance Authority Contact Mode | Surveillance Tap ID / LRN | Start Date | End Date |
|---|---|---|---|---|---|---|---|---|
| 9192536694 | - | Voice | Notify | fraud@FBI.gov | e-mail | - | 5/10/2005 | 6/10/2005 |
| 9195669898 | 9195668422 | Voice | Notify, CDR | 9195551234 | SMS | - | 4/12/2005 | 5/18/2005 |
| 9195658878 | Bob@crime.org | Msg | Msg Copy | 9195552325 | VoiceMail | - | 5/11/2005 | 8/11/2005 |
| 9195668474 | | Voice | Notify, Redirect | Smith@FBl.gov | IM | 9195550000 | 4/10/2005 | none |

The subscriber identifier may include, for example, a mobile subscriber identifier (e.g., MSISDN, IMSI, MIN), an E.164 formatted telephone number, a dialable short code identifier, an IP address, an electronic mail address, a network alias identifier, or a SIP URI.

The corresponding ENUM-based information may similarly include, for example, a mobile subscriber identifier, an E.164 formatted telephone number, a dialable short code identifier, an IP address, an electronic mail address, a network alias identifier, and/or a SIP URI. The ENUM-based information corresponds to the subscriber ID and is originated by ENUM database **110.**

The communication mode identifier is used to specify a particular mode or communication medium. The communication mode identifier may include, for example, a voice service mode identifier, a short message service mode identifier, multimedia message service mode identifier, instant message service mode identifier, and/or an electronic mail service mode identifier.

The surveillance action instruction specifies actions that are to be taken if the associated subscriber is involved in a call or a call setup attempt. The surveillance action instruction may include, for example, providing a notification message to a surveillance authority, generating a log entry in surveillance log, generating a call detail record (CDR), redirecting the call, and/or blocking the call.

The surveillance authority contact identifier may be used for sending notification messages or other required communications with a surveillance authority. The surveillance authority contact identifier may include, for example, a mobile subscriber identifier, a plain old telephone service telephone number, a dialable short code identifier, an IP address, an electronic mail address, a network alias identifier, or a SIP URI.

The surveillance authority contact mode identifier may be used to specify a particular mode of contact with a designated surveillance authority. The surveillance authority contact mode identifier may include, for example, electronic mail, instant message, short message service, multimedia message service, voice, and voicemail.

The surveillance tap identifier identifies a second communication node to route a call to for monitoring. A surveillance tap identifier may be included with respect to calls that require a real-time tap of the bearer stream, where a bearer stream may include audio, video, or other streaming data (e.g., WEB browsing session). The surveillance tap identifier may be used to identify a particular node in the network through which a watched call is to be forcibly routed / rerouted. Examples of a surveillance tap ID may include an IP address, an SS7 point code address, or a network alias routing address, such as an SS7 location routing number. The surveillance tap ID may, for instance, identify a law enforcement equipped tandem office, or media gateway.

The surveillance start date and end date may include date and/or time information indicating when surveillance should start and end.

Additional parameters not shown in exemplary Table 1 include a text-to-voice conversion preference and a language translation preference, The text-to-voice conversion preference may be specified with respect to the surveillance of messaging service messages (e.g., SMS, IM, MMS). The text-to-voice conversion preference identifies whether to translate an intercepted text message from text to voice prior to communicating the message contents to a surveillance authority.

The language translation preference identifies whether to translate an intercepted text message into a language required by a surveillance authority. More particularly, with respect to international applications, it may be useful for the database to associate a language preference with a surveillance authority, such that an intercepted text message may be translated into a language required by a surveillance authority. For example, a text message that is written in German may be translated into French, so that a French surveillance authority may quickly and easily review / interpret the contents of the intercepted German text message. The same language translation preference may be specified with respect to text-to-voice conversions.

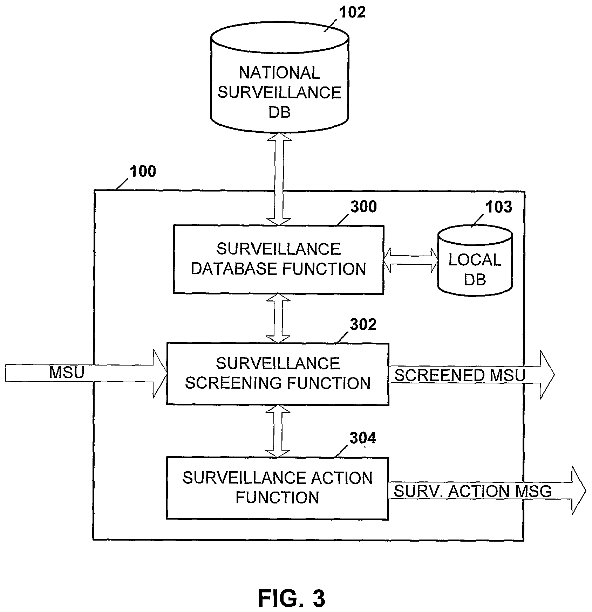

Figure 3 is a block diagram illustrating a system for providing surveillance monitoring in a communication network based on a national surveillance database according to one aspect of the subject matter disclosed herein. The system includes communications node **100.** Communication node **100** includes a surveillance database function **300,** a surveillance screening function **302,** and a surveillance action function **304.** Surveillance database function **300** receives communication-related information from national surveillance database **102** relating to communications associated with individuals under surveillance and stores the communication-related information in local database **103.** The communication-related information may include ENUM information either from national surveillance database **102** or from ENUM database **110,** as discussed above.

Surveillance screening function **302** uses the received communication-related information to screen signaling messages, such as SS7 message signaling units (MSUs) relating to communications associated with the individuals. Surveillance screening function screens signaling messages to determine, for example, whether a called party and/or a calling party associated with the signaling message corresponds to a subscriber ID included in the communication-related information. The signaling messages that may be screened include, for example, SS7 integrated services user part (ISUP), SS7 signaling connection control part (SCCP), transaction capabilities application part (TCAP), signaling transport (SIGTRAN) message transfer part 3 user adaptation layer (M3UA), SIGTRAN SCCP user adaptation layer (SUA), SIP, and H.323 signaling messages. Surveillance screening function **302** communicates with surveillance database function **300** to determine if the called and/or calling party associated with a screened signaling message is in local database **103.**

Surveillance action function **304** performs a surveillance action in response to surveillance screening function **302** to determine whether the called party and/or the calling party associated with the screened signaling message corresponds to a subscriber identifier included in the communication-related information. For example, surveillance action function **304** may provide a notification message to a surveillance authority, generate a log entry in surveillance log, generate a call detail record (CDR), redirect a call associated with the screen signaling message, and/or block a call associated with the screen signaling message. Surveillance action function **304** may send a surveillance action message to another network entity to carry out the surveillance action or may perform the surveillance action at communication node **100.**

The subject matter described herein is not limited to performing surveillance screening using functions associated with a communication node. In an alternative implementation, some or all of the screening functions illustrated in Figure 3 may be located on elements of a network data collection system that is separate from or partially separate from communication node 100. One example of a commercially available network data collection platform suitable for implementing the subject matter described herein is the Sentinels system available from Tekelec of Calabasas California. Briefly, the Sentinel system includes message copy functions located internal to a communication node, such as a signal transfer point. The message copy functions copy signaling messages and forward the signaling message copies to a data collection platform. In addition, the Sentinel™ system may include link monitoring probes that non-intrusively copy signaling messages from signaling links external to the communication node. The probes also forward the forward the signaling message copies to the data collection platform. The network data collection platform store copies of the signaling messages and forward the message copies to regional message copying site collectors. The site collectors forward messages that meet predetermined filter criteria to a data gateway server. According to an exemplary implementation of the subject matter described herein, surveillance database function **300,** surveillance screening function **302,** surveillance action function **304,** and local database **103** may be located on the data gateway server.

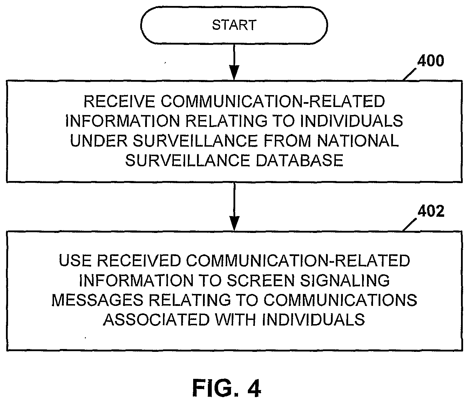

Figure 4 is a flow diagram illustrating a method for providing surveillance monitoring in a communication network based on a national surveillance database according to an aspect of the subject matter described herein. In step **400,** communication-related information relating to individuals under surveillance is received from national surveillance database **102.** In step **402,** the received communication-related information is used to screen signaling messages relating to communications associated with the individuals.

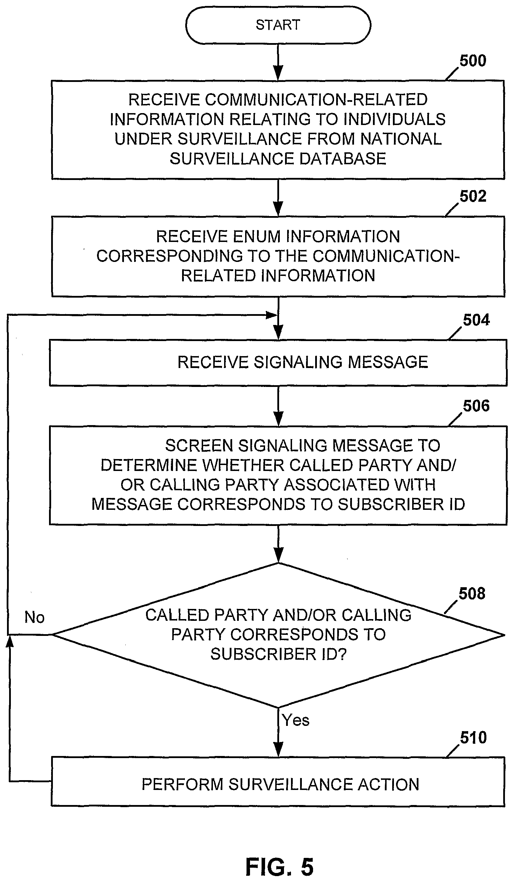

Figure 5 is a flow diagram illustrating a method for providing surveillance monitoring in a communication network based on a national surveillance database according to another aspect of the subject matter described herein. In step **500,** communication-related information relating to individuals under surveillance is received from national surveillance database **102.** As discussed above, the information may be received directly or via regional surveillance database **108.** In step **502,** ENUM information corresponding to the communication-related information is received. The corresponding ENUM information may be received from national surveillance database **102,** regional surveillance database **108,** or directly from ENUM database **110,** as described above. A signaling message is received in step **504.** The signaling message is screened to determine whether called party and/or calling party associated with message corresponds to a subscriber ID in the communication-related information in step **506.** In response to determining that a called party and/or calling party associated with the message corresponds to the subscriber ID in step **508,** a surveillance action is performed in step **510.**

As discussed above, surveillance actions include providing a notification message to a surveillance authority, generating a log entry in surveillance log, generating a call detail record (CDR), redirecting a call associated with the screen signaling message, and blocking a call associated with the screen signaling message. In response to determining that a called party and/or calling party associated with the message corresponds to the subscriber ID in step 508, the message is processed normally. In either case, the next message is received and processed accordingly.

It will be understood that various details of the invention may be changed without departing from the scope of the claimed subject matter. Furthermore, the foregoing description is for the purpose of illustration only, and not for the purpose of limitation, as the scope of protection sought is defined by the claims as set forth hereinafter.

## Claims

1. A method for providing surveillance monitoring in a communication network based on a national surveillance database (102), the method comprising each of a plurality of communications nodes (100):
receiving (400), from a national surveillance database (102) that is separate from the plurality of communications nodes (100) and that includes communication-related information relating to individuals under surveillance, communication-related information relating to the individuals; and
using (402) the received communication-related information to screen signaling messages relating to communications associated with the individuals, wherein using (402) the received communication-related information to screen signaling messages relating to communications associated with the individuals, includes screening a signalling message to determine whether at least one of a called party and a calling party associated with the message corresponds to a subscriber identifier included in the communication-related information;
querying an electronic numbering, ENUM, database (110) for ENUM information including at least one additional subscriber identifier corresponding to a subscriber ID in the communication-related information, wherein the ENUM database (110) is separate from the plurality of communications nodes (100) and the national surveillance database (102);
receiving ENUM information including at least one additional subscriber identifier corresponding to a subscriber ID in the communication-related information; and
using the received ENUM information to screen signalling messages relating to communications associated with the individuals.

2. The method of claim 1 wherein receiving (400) communication-related information relating to the individuals includes receiving at least one of a subscriber identifier, corresponding ENUM based information, a communication mode identifier, a surveillance action instruction, a surveillance authority contact identifier, a surveillance authority contact mode identifier, a text-to-voice conversion preference, a language translation preference, a surveillance tap identifier, a surveillance start indicator, and a surveillance end indicator.

3. The method of claim 1 comprising performing a surveillance action in response to determining that at least one of the called party and the calling party associated with the screened signaling message corresponds to the subscriber identifier included in the communication-related information.

4. A computer program product comprising computer executable instructions embodied in a computer-readable medium for performing, in each of a plurality of communications nodes (100), a method comprising:
receiving (400), from a national surveillance database (102) that is separate from the plurality of communications nodes (100) and that includes communication-related information relating to individuals under surveillance, communication-related information relating to the individuals; and
using the received communication-related information to screen signaling messages relating to communications associated with the individuals, wherein using (402) the received communication-related information to screen signaling messages relating to communications associated with the individuals, includes screening a signalling message to determine whether at least one of a called party and a calling party associated with the message corresponds to a subscriber identifier included in the communication-related information;
querying an electronic numbering, ENUM, database (110) for ENUM information including at least one additional subscriber identifier corresponding to a subscriber ID in the communication-related information, wherein the ENUM database (110) is separate from the plurality of communications nodes (100) and the national surveillance database (102);
receiving ENUM information including at least one additional subscriber identifier corresponding to a subscriber ID in the communication-related information; and
using the received ENUM information to screen signalling messages relating to communications associated with the individuals.

5. A system for providing surveillance monitoring in a communication network based on a national surveillance database (102), the system comprising a plurality of communications nodes (100), wherein each communication node (100) comprises:
a surveillance database function (300) for receiving, from a national surveillance database (102) that is separate from the plurality of communications nodes (100) and that includes communication-related information relating to individuals under surveillance, communication-related information relating to the individuals and for storing the communication-related information; and
a surveillance screening function (302) for using the received communication-related information to screen signaling messages relating to communications associated with the individuals, wherein the surveillance screening function (300) is configured to screen signaling messages relating to communications associated with the individuals to determine whether at least one of a called party and a calling party associated with the message corresponds to a subscriber identifier included in the communication-related information;
wherein the system further comprises an electronic numbering, ENUM, database (110) for providing ENUM information to the national surveillance database (102), wherein the ENUM database (110) is separate from the plurality of communications nodes (100) and the national surveillance database (102); and
the surveillance database function (300) is adapted to query the ENUM database (110) for ENUM information and receive ENUM information including at least one additional subscriber identifier corresponding to a subscriber ID in the communication-related information, and the surveillance screening function (302) is adapted to use received ENUM information including at least one additional subscriber identifier corresponding to a subscriber ID in the communication-related information to screen signaling messages relating to communications associated with the individuals.

6. The system of claim 5 wherein the surveillance database function (300) is adapted to receive at least one of a subscriber identifier, corresponding ENUM-based information, a communication mode identifier, a surveillance action instruction, a surveillance authority contact identifier, a surveillance authority contact mode identifier, a text-to-voice conversion preference, a language translation preference, a surveillance tap identifier, a surveillance start indicator, and a surveillance end indicator.

7. The system of claim 5 comprising a surveillance action function (304) for performing a surveillance action in response to the surveillance screening function determining that at least one of the called party and the calling party associated with the screened signaling message corresponds to the subscriber identifier included in the communication-related information.

## Patentansprüche

1. Verfahren zur Bereitstellung einer Beobachtungsüberwachung in einem Kommunikationsnetz auf der Basis einer nationalen Beobachtungsdatenbank (102), wobei das Verfahren umfasst, das jeder aus einer Vielzahl von Kommunikationsknoten (100) Folgendes ausführt:
Empfangen (400), von einer nationalen Beobachtungsdatenbank (102), die von der Vielzahl von Kommunikationsknoten (100) getrennt ist und die kommunikationsbezogene Informationen über Personen, die überwacht werden, umfasst, von kommunikationsbezogenen Informationen über die Personen; und
Verwenden (402) der empfangenen kommunikationsbezogenen Informationen zum Filtern von Signalisierungsnachrichten, die sich auf Kommunikationen beziehen, die den Personen zugeordnet sind, wobei das Verwenden (402) der empfangenen kommunikationsbezogenen Informationen zum Filtern von Signalisierungsnachrichten, die sich auf Kommunikationen beziehen, die den Personen zugeordnet sind, Folgendes umfasst: Filtern einer Signalisierungsnachricht, um zu bestimmen, ob mindestens ein angerufener Teilnehmer oder ein anrufender Teilnehmer, der der Nachricht zugeordnet ist, einer Teilnehmerkennung entspricht, die in den kommunikationsbezogenen Informationen enthalten ist;
Abfragen einer elektronischen Nummerierungs-, ENUM-, Datenbank (110) nach ENUM-Informationen, die mindestens eine zusätzliche Teilnehmerkennung umfassen, die einer Teilnehmer-ID in den kommunikationsbezogenen Informationen entspricht, wobei die ENUM-Datenbank (110) von der Vielzahl von Kommunikationsknoten (100) und der nationalen Beobachtungsdatenbank (102) getrennt ist;
Empfangen von ENUM-Informationen, die mindestens eine zusätzliche Teilnehmerkennung umfassen, die einer Teilnehmer-ID in den kommunikationsbezogenen Informationen entspricht; und
Verwenden der empfangenen ENUM-Informationen, um Signalisierungsnachrichten zu filtern, die sich auf Kommunikationen beziehen, die den Personen zugeordnet sind.

2. Verfahren nach Anspruch 1, wobei das Empfangen (400) kommunikationsbezogener Informationen, die sich auf die Personen beziehen, das Empfangen von mindestens einem von Folgendem umfasst: einer Teilnehmerkennung, entsprechender ENUM-basierter Informationen, einer Kommunikationsmoduskennung, eines Beobachtungsvorgangsbefehls, einer Beobachtungsbehördenkontaktkennung, einer Beobachtungsbehördenkontaktmoduskennung, einer Text-Sprache-Umwandlungspräferenz, einer Sprachübersetzungspräferenz, einer Beobachtungsabgriffkennung, einer Beobachtungsstartanzeige und einer Beobachtungsendanzeige.

3. Verfahren nach Anspruch 1, das das Durchführen eines Beobachtungsvorgangs als Reaktion auf die Bestimmung umfasst, dass mindestens die angerufene Partei oder die anrufende Partei, die der gefilterten Signalisierungsnachricht zugeordnet ist, der Teilnehmerkennung entspricht, die in den kommunikationsbezogenen Informationen enthalten ist.

4. Computerprogrammprodukt, das computerausführbare Befehle umfasst, die in einem computerlesbaren Medium verkörpert sind, um in jedem einer Vielzahl von Kommunikationsknoten (100) ein Verfahren durchzuführen, das Folgendes umfasst:
Empfangen (400), von einer nationalen Beobachtungsdatenbank (102), die von der Vielzahl von Kommunikationsknoten (100) getrennt ist und die kommunikationsbezogene Informationen über Personen, die überwacht werden, umfasst, von kommunikationsbezogenen Informationen über die Personen; und
Verwenden der empfangenen kommunikationsbezogenen Informationen zum Filtern von Signalisierungsnachrichten, die sich auf Kommunikationen beziehen, die den Personen zugeordnet sind, wobei das Verwenden (402) der empfangenen kommunikationsbezogenen Informationen zum Filtern von Signalisierungsnachrichten, die sich auf Kommunikationen beziehen, die den Personen zugeordnet sind, das Filtern einer Signalisierungsnachricht umfasst, um zu bestimmen, ob mindestens ein angerufener Teilnehmer oder ein anrufender Teilnehmer, der der Nachricht zugeordnet ist, einer Teilnehmerkennung entspricht, die in den kommunikationsbezogenen Informationen enthalten ist;
Abfragen einer elektronischen Nummerierungs-, ENUM-, Datenbank (110) nach ENUM-Informationen, die mindestens eine zusätzliche Teilnehmerkennung umfassen, die einer Teilnehmer-ID in den kommunikationsbezogenen Informationen entspricht, wobei die ENUM-Datenbank (110) von der Vielzahl von Kommunikationsknoten (100) und der nationalen Beobachtungsdatenbank (102) getrennt ist;
Empfangen von ENUM-Informationen, die mindestens eine zusätzliche Teilnehmerkennung umfassen, die einer Teilnehmer-ID in den kommunikationsbezogenen Informationen entspricht; und
Verwenden der empfangenen ENUM-Informationen, um Signalisierungsnachrichten zu filtern, die sich auf Kommunikationen beziehen, die den Personen zugeordnet sind.

5. System zur Bereitstellung einer Beobachtungsüberwachung in einem Kommunikationsnetz auf der Basis einer nationalen Beobachtungsdatenbank (102), wobei das System eine Vielzahl von Kommunikationsknoten (100) umfasst, wobei jeder Kommunikationsknoten (100) Folgendes umfasst:
eine Beobachtungsdatenbankfunktion (300) zum Empfangen,> von einer nationalen Beobachtungsdatenbank (102), die von der Vielzahl von Kommunikationsknoten (100) getrennt ist und die kommunikationsbezogene Informationen über Personen, die überwacht werden, umfasst, von kommunikationsbezogenen Informationen über die Personen und Speichern der kommunikationsbezogenen Informationen; und
eine Beobachtungsfilterfunktion (302) zum Verwenden der empfangenen kommunikationsbezogenen Informationen zum Filtern von Signalisierungsnachrichten, die sich auf Kommunikationen beziehen, die den Personen zugeordnet sind, wobei die Beobachtungsfilterfunktion (300) dafür konfiguriert ist, Signalisierungsnachrichten zu filtern, die sich auf Kommunikationen beziehen, die den Personen zugeordnet sind, um zu bestimmen, ob mindestens ein angerufener Teilnehmer oder ein anrufender Teilnehmer, der der Nachricht zugeordnet ist, einer Teilnehmerkennung entspricht, die in den kommunikationsbezogenen Informationen enthalten ist;
wobei das System ferner eine elektronische Nummerierungs- ENUM, Datenbank (110) zur Bereitstellung von ENUM-Informationen für die nationale Beobachtungsdatenbank (102) umfasst, wobei die ENUM-Datenbank (110) von der Vielzahl von Kommunikationsknoten (100) und der nationalen Beobachtungsdatenbank (102) getrennt ist; und
wobei die Beobachtungsdatenbankfunktion (300) für Folgendes ausgelegt ist: Abfragen der ENUM-Datenbank (110) nach ENUM-Informationen und Empfangen von ENUM-Informationen, die mindestens eine zusätzliche Teilnehmerkennung umfassen, die einer Teilnehmer-ID in den kommunikationsbezogenen Informationen entspricht, und wobei die Beobachtungsfilterfunktion (302) dafür ausgelegt ist, empfangene ENUM-Informationen einschließlich mindestens einer zusätzlichen Teilnehmerkennung, die einer Teilnehmer-ID entspricht, in den kommunikationsbezogenen Informationen zu verwenden, um Signalisierungsnachrichten zu filtern, die sich auf Kommunikationen beziehen, die den Personen zugeordnet sind.

6. System nach Anspruch 5, wobei die Steuereinheit (300) ferner dafür konfiguriert ist, mindestens eines von Folgendem zu steuern: einer Teilnehmerkennung, entsprechender ENUM-basierter Informationen, einer Kommunikationsmoduskennung, eines Beobachtungsvorgangsbefehls, einer Beobachtungsbehördenkontaktkennung, einer Beobachtungsbehördenkontaktmoduskennung, einer Text-Sprache-Umwandlungspräferenz, einer Sprachübersetzungspräferenz, einer Beobachtungsabgriffkennung, einer Beobachtungsstartanzeige und einer Beobachtungsendanzeige.

7. System nach Anspruch 5, das eine Beobachtungsvorgangsfunktion (304) zum Durchführen eines Beobachtungsvorgangs als Reaktion auf die Beobachtungsfilterfunktion umfasst, die bestimmt, dass mindestens die angerufene Partei oder die anrufende Partei, die der gefilterten Signalisierungsnachricht zugeordnet ist, der Teilnehmerkennung entspricht, die in den kommunikationsbezogenen Informationen enthalten ist.

## Revendications

1. Procédé de mise en oeuvre de contrôle de surveillance dans un réseau de communication reposant sur une base de données de surveillance à l'échelle nationale (102), le procédé comportant, au niveau de chacun d'une pluralité de noeuds de communication (100), les étapes consistant à :
recevoir (400), en provenance d'une base de données de surveillance à l'échelle nationale (102) qui est séparée de la pluralité de noeuds de communication (100) et qui comprend des informations se rapportant aux communications concernant des individus sous surveillance, des informations se rapportant aux communications concernant les individus ; et
utiliser (402) les informations se rapportant aux communications ayant été reçues pour filtrer des messages de signalisation concernant les communications associées aux individus, dans lequel l'étape consistant à utiliser (402) les informations se rapportant aux communications ayant été reçues pour filtrer des messages de signalisation concernant les communications associées aux individus comprend l'étape consistant à filtrer un message de signalisation pour déterminer si au moins l'un parmi un appelé et un appelant associé au message correspond à un identifiant d'abonné compris dans les informations se rapportant aux communications ;
interroger une base de données ENUM (electronic numbering - numérotage électronique) (110) pour obtenir des informations ENUM comprenant au moins un identifiant d'abonné supplémentaire correspondant à une ID d'abonné dans les informations se rapportant aux communications, dans lequel la base de données ENUM (110) est séparée de la pluralité de noeuds de communication (100) et de la base de données de surveillance à l'échelle nationale (102) ;
recevoir des informations ENUM comprenant au moins un identifiant d'abonné supplémentaire correspondant à une ID d'abonné dans les informations se rapportant aux communications ; et
utiliser les informations ENUM ayant été reçues pour filtrer les messages de signalisation concernant les communications associées aux individus.

2. Procédé selon la revendication 1, dans lequel l'étape consistant à recevoir (400) des informations se rapportant aux communications concernant les individus comprend l'étape consistant à recevoir au moins l'un parmi un identifiant d'abonné, des informations de type ENUM correspondantes, un identifiant de mode de communication, une instruction d'action de surveillance, un identifiant de contact d'autorisation de surveillance, un identifiant de mode de contact d'autorisation de surveillance, une préférence de conversion texte/voix, une préférence de traduction linguistique, un identifiant d'écoute de surveillance, un indicateur de début de surveillance, et un indicateur de fin de surveillance.

3. Procédé selon la revendication 1, comportant l'étape consistant à effectuer une action de surveillance en réponse à la détermination comme quoi au moins l'un parmi l'appelé et l'appelant associé au message de signalisation filtré correspond à l'identifiant d'abonné compris dans les informations se rapportant aux communications.

4. Produit programme informatique comportant des instructions exécutables sur ordinateur incorporées dans un support lisible par ordinateur à des fins d'exécution, dans chacun d'une pluralité de noeuds de communication (100), un procédé comportant les étapes consistant à :
recevoir (400), en provenance d'une base de données de surveillance à l'échelle nationale (102) qui est séparée de la pluralité de noeuds de communication (100) et qui comprend des informations se rapportant aux communications concernant des individus sous surveillance, des informations se rapportant aux communications concernant les individus ; et
utiliser les informations se rapportant aux communications ayant été reçues pour filtrer des messages de signalisation concernant les communications associées aux individus, dans lequel l'étape consistant à utiliser (402) les informations se rapportant aux communications ayant été reçues pour filtrer des messages de signalisation concernant les communications associées aux individus comprend l'étape consistant à filtrer un message de signalisation pour déterminer si au moins l'un parmi un appelé et un appelant associé au message correspond à un identifiant d'abonné compris dans les informations se rapportant aux communications ;
interroger une base de données ENUM (electronic numbering - numérotage électronique) (110) pour obtenir des informations ENUM comprenant au moins un identifiant d'abonné supplémentaire correspondant à une ID d'abonné dans les informations se rapportant aux communications, dans lequel la base de données ENUM (110) est séparée de la pluralité de noeuds de communication (100) et de la base de données de surveillance à l'échelle nationale (102) ;
recevoir des informations ENUM comprenant au moins un identifiant d'abonné supplémentaire correspondant à une ID d'abonné dans les informations se rapportant aux communications ; et
utiliser les informations ENUM ayant été reçues pour filtrer les messages de signalisation concernant les communications associées aux individus.

5. Système de mise en oeuvre de contrôle de surveillance dans un réseau de communication reposant sur une base de données de surveillance à l'échelle nationale (102), le système comportant une pluralité de noeuds de communication (100), dans lequel chaque noeud de communication (100) comporte :
une fonction de base de données de surveillance (300) servant à recevoir, en provenance d'une base de données de surveillance à l'échelle nationale (102) qui est séparée de la pluralité de noeuds de communication (100) et qui comprend des informations se rapportant aux communications concernant des individus sous surveillance, des informations se rapportant aux communications concernant les individus et servant à stocker les informations se rapportant aux communications ; et
une fonction de filtrage de surveillance (302) servant à utiliser les informations se rapportant aux communications ayant été reçues pour filtrer des messages de signalisation concernant les communications associées aux individus, dans lequel la fonction de filtrage de surveillance (300) est configurée pour filtrer des messages de signalisation concernant les communications associées aux individus pour déterminer si au moins l'un parmi un appelé et un appelant associé au message correspond à un identifiant d'abonné compris dans les informations se rapportant aux communications ;
dans lequel le système comporte par ailleurs une base de données ENUM (electronic numbering - numérotage électronique) (110) servant à fournir des informations ENUM à la base de données de surveillance à l'échelle nationale (102), dans lequel la base de données ENUM (110) est séparée de la pluralité de noeuds de communication (100) et de la base de données de surveillance à l'échelle nationale (102) ; et
la fonction de base de données de surveillance (300) est adaptée pour interroger la base de données ENUM (110) pour obtenir des informations ENUM et recevoir des informations ENUM comprenant au moins un identifiant d'abonné supplémentaire correspondant à une ID d'abonné dans les informations se rapportant aux communications, et la fonction de filtrage de surveillance (302) est adaptée pour utiliser les informations ENUM ayant été reçues comprenant au moins un identifiant d'abonné supplémentaire correspondant à une ID d'abonné dans les informations se rapportant aux communications pour filtrer les messages de signalisation concernant les communications associées aux individus.

6. Système selon la revendication 5, dans lequel la fonction de base de données de surveillance (300) est adaptée pour recevoir au moins l'un parmi un identifiant d'abonné, des informations de type ENUM correspondantes, un identifiant de mode de communication, une instruction d'action de surveillance, un identifiant de contact d'autorisation de surveillance, un identifiant de mode de contact d'autorisation de surveillance, une préférence de conversion texte/voix, une préférence de traduction linguistique, un identifiant d'écoute de surveillance, un indicateur de début de surveillance, et un indicateur de fin de surveillance.

7. Système selon la revendication 5, comportant une fonction d'action de surveillance (304) servant à effectuer une action de surveillance en réponse à la fonction de filtrage de surveillance qui détermine comme quoi au moins l'un parmi l'appelé et l'appelant associé au message de signalisation filtré correspond à l'identifiant d'abonné compris dans les informations se rapportant aux communications.
